# EUROPEAN PATENT SPECIFICATION

(11) **EP 0 722 857 B1**
(45) Date of publication and mention of the grant of the patent: **23.08.2000**
(21) Application number: 96300410.6
(22) Date of filing: 22.01.1996
(51) Int. Cl.: B60R 9/058

(54) **Apparatus for fixing vehicle carrying platforms**
Vorrichtung zur Befestigung eines Dachgepäckträgers für Kraftfahrzeuge
Dispositif de fixation pour porte-bagage d'un véhicule

(30) Priority: 20.01.1995 JP 2460395
(43) Date of publication of application: 24.07.1996
(73) Proprietor: Car Mate Manufacturing Company Limited, Tokyo 162 (JP)
(72) Inventor: Kinouchi, Toyohisa, c/o Car Mate Manuf. Co. Ltd., Tokyo (JP); Okutsu, Noriyuki, c/o Car Mate Manuf. Co. Ltd., Tokyo (JP); Nomoto, Seiji, c/o Car Mate Manuf. Co. Ltd., Tokyo (JP)
(74) Representative: Pacitti, Pierpaolo A.M.E.

(56) References cited:
- EP-A- 0 527 708
- EP-A- 0 543 146

## Description

The present invention relates to an apparatus for fixing a carrying platform to a vehicle, and in particular, to a vehicle carrying platform fixing apparatus that can prevent the hook from being loosened.

Conventional apparatuses for fixing a vehicle carrying platform include those described in Japanese Utility Model Laid Open No. 60-106854, Japanese Utility Model Laid Open No. 64-1140 and Japanese Patent Laid Open No. 62-68154, which corresponds to the preamble of claim 1.

The apparatuses described in Japanese Utility Model Laid Open No. 60-106854 and Japanese Utility Model Laid Open No. 64-1140 require a hook and a stay to be tightened together and the stay and a carrier bar to be separately tightened together, resulting in an operation that requires much time and labour. In addition, when a load is applied to the carrier bar, the carrier bar bends to open the hook outward (the astride phenomenon), thereby loosening the tightened sections. These apparatuses include no mechanism to prevent such loosening.

The apparatus described in Japanese Patent Laid Open No. 62-68154 can simultaneously fix a hook to the stay and the stay to the carrier, but has no mechanism to prevent said tightened sections from loosening.

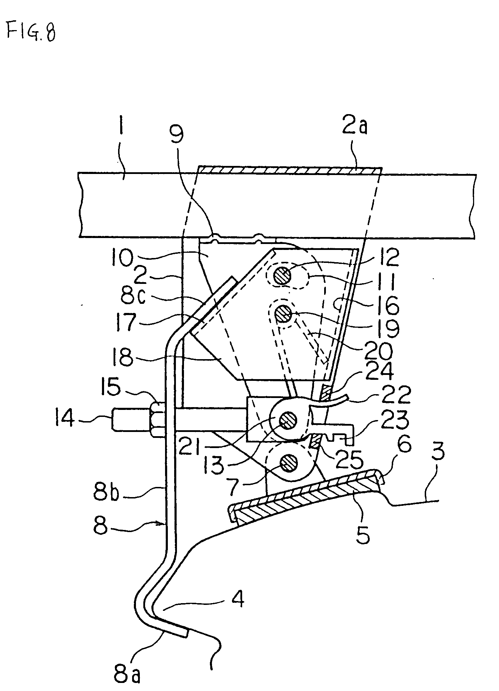

In the apparatus described in Japanese Patent Laid Open No. 62-68154 and shown in Figure 8 thereof, during the astride phenomenon, the tightening sections move inward, while the upper part (the slide surface) of the hook simultaneously moves inward and downward relative to the rotating shaft. In other words the lower part of the hook rotates outward, whereas its upper part rotates inward. As a result, the hook cannot prevent loosening. A roof-side pressing section below the hook also opens outward of the surface of a roof side and is likely to be removed from the roof side.

The purpose of this invention is to eliminate or mitigate these problems.

According to the present invention, there is provided apparatus for fixing a carrying platform to a vehicle, the apparatus comprising:
a stay for supporting the platform on the roof of a vehicle;
a hook having a lower hooked part for engaging a portion of the vehicle;
a pressing plate having a portion for engaging a bar of the platform such that the bar of the platform is engaged between the pressing plate and the stay; and
a tightening member connecting said pressing plate to the hook;
characterised in that force exerted on the pressing plate by weight on the platform is transmitted to the hook to force the hook against the portion of the vehicle, wherein at least a portion of said force exerted on said pressing plate is transmitted to the hook via said tightening member.

Typically also, at least a portion of the force exerted on the pressing plate is transmitted to the hook via outward movement of an upper part of the hook.

The tightening member typically facilitates inward movement of an intermediate portion of the hook simultaneously with the outward movement of the upper part of the hook.

Typically, the tightening member substantially restricts movement of an intermediate portion of the hook simultaneously with the outward movement of the upper part of the hook.

The pressing plate is typically pivotally mounted for pivotal movement with respect to the stay.

Typically also, the pressing plate includes a formation for engaging a corresponding formation on the bar of the platform, and wherein relative movement between the pressing plate and the bar is substantially restricted.

The stay may be U- or C-shaped.

The apparatus may include a self-locking member to prevent loosening of the bar of the platform.

The self-locking member typically comprises a lever which engages a first protrusion on the stay, and a toothed section which engages a second protrusion on the stay.

Typically, the self-locking mechanism is released by movement of the lever and the toothed section towards one another.

In certain embodiments the stay has in its upper part a surface that engages an upper surface of the bar, and a lower part which engages the vehicle; the pressing plate engaging a lower surface of the bar, and having an upper part which is connected to an intermediate portion of the stay via a pin, and a lower part which is connected to an intermediate portion of the hook via the tightening member; the apparatus further including a hook-holding member having a slide section that slidably engages the upper part of the hook, the upper part of the hook-holding member being connected to the intermediate portion of the stay via said pin and the intermediate portion of the hook-holding member being pivotally connected to the intermediate portion of the pressing plate; and an elastic means to bias the hook-holding member into engagement with the upper part of the hook.

In alternative embodiments the stay has in its upper part a surface that engages an upper surface of the bar, and a lower part which engages the vehicle, and which is connected to an intermediate portion of the hook via the tightening member; the pressing plate has a pressing section on its upper surface that engages a lower surface of the bar, and an upper part which is connected to an intermediate portion of the stay via a pin; the pressing plate having a slide section that slidably engages the upper part of the hook.

The apparatus typically includes an elastic means inserted between the stay and the pressing plate.

In certain other embodiments, the stay has in its upper part a surface that engages an upper surface of the bar, and a lower part which engages the vehicle; the pressing plate has a pressing section on its upper surface that engages a lower surface of the bar, and is connected to an intermediate portion of the stay via a pin; the apparatus further including a hook-holding member having a slide section that slidably engages the upper part of the hook, the upper part of the hook-holding member being connected to the intermediate portion of the stay via said pin, and being rotatably connected to the intermediate portion of the pressing plate via a pivotal pin, and which is connected to an intermediate portion of the hook via the tightening member.

In other embodiments, the stay has on its upper part a surface that engages a lower surface of the bar, and a lower part which engages the vehicle; the pressing plate has a pressing section on its upper surface that engages an upper surface of the bar, and is connected to an intermediate portion of the stay via a pin and slot arrangement; the apparatus further including a hook-holding member having a slide section that slidably engages the upper part of the hook, the upper part of the hook-holding member being connected to the intermediate portion of the stay via said pin and the intermediate portion of the hook-holding member being rotatably connected to the intermediate portion of the pressing plate via a pivotal pin, and a lower part which is connected to an intermediate portion of the hook via the tightening member.

The elastic means typically comprises a spring.

In certain embodiments, the tightening member comprises a pin for pivotally attaching the pressing plate to the hook, a mounting member attached to the pin, a bolt, the head of which is coupled to the mounting member, and a nut threadedly coupled to the bolt.

In other embodiments, the tightening member comprises a bolt which includes a swivel, the swivel engaging a rib provided on the stay for relative movement between the stay and the tightening member, and a nut threadedly engaged with the bolt.

Embodiments of the invention will now be described, by way of example, with reference to the accompanying drawings in which:

Figure 1 is a vertical cross-sectional front view of an apparatus for fixing a vehicle carrying platform according to this invention.

Figure 2 is a vertical cross-sectional side view of the apparatus for fixing a vehicle carrying platform according to this invention.

Figure 3 is a front view of a stay in the apparatus for fixing a vehicle carrying platform according to this invention.

Figure 4 is a front view of a pressing plate in the apparatus for fixing a vehicle carrying platform according to this invention.

Figure 5 is a front view of a hook-holding member in the apparatus for fixing a vehicle carrying platform according to this invention.

Figure 6 is a vertical cross-sectional front view of the apparatus for fixing a vehicle carrying platform according to this invention before an operation.

Figure 7 is a vertical cross-sectional front view of the apparatus for fixing a vehicle carrying platform according to this invention during an operation.

Figure 8 is a vertical cross-sectional front view of the apparatus for fixing a vehicle carrying platform according to the second embodiment of this invention.

Figure 9 is a vertical cross-sectional front view of the apparatus for fixing a vehicle carrying platform according to the third embodiment of this invention.

Figure 10 is a vertical cross-sectional front view of the third embodiment the apparatus for fixing a vehicle carrying platform according to this invention before an operation.

Figure 11 is a vertical cross-sectional front view of the third embodiment of the apparatus for fixing a vehicle carrying platform according to this invention during an operation.

Figure 12 is a vertical cross-sectional front view of the apparatus for fixing a vehicle carrying platform according to the fourth embodiment of this invention.

Figure 13 is a vertical cross-sectional front view of the fourth embodiment the apparatus for fixing a vehicle carrying platform according to this invention before an operation.

Figure 14 is a vertical cross-sectional front view of the fourth embodiment of the apparatus for fixing a vehicle carrying platform according to this invention during an operation.

Figure 15 is a vertical cross-sectional front view of the apparatus for fixing a vehicle carrying platform according to the fifth embodiment of this invention.

Figure 16 is a vertical cross-sectional front view of the fifth embodiment the apparatus for fixing a vehicle carrying platform according to this invention before an operation.

Figure 17 is a vertical cross-sectional front view of the apparatus for fixing a vehicle carrying platform according to the sixth embodiment of this invention.

Figure 18 is a front view of the pressing plate in the apparatus for fixing a vehicle carrying platform according to the sixth embodiment of this invention.

Figure 19 is a front view of the hook-holding member in the apparatus for fixing a vehicle carrying platform according to the sixth embodiment of this invention.

Figure 20 is a vertical cross-sectional front view of the sixth embodiment the apparatus for fixing a vehicle carrying platform according to this invention before an operation.

Figure 21 is a vertical cross-sectional front view of the sixth embodiment of the apparatus for fixing a vehicle carrying platform according to this invention during an operation.

Figure 22 is a vertical cross-sectional front view of the apparatus for fixing a vehicle carrying platform according to the seventh embodiment of this invention.

Figure 23 is a front view of the stay in the apparatus for fixing a vehicle carrying platform according to the seventh embodiment of this invention.

Figure 24 is a front view of the pressing plate in the apparatus for fixing a vehicle carrying platform according to the seventh embodiment of this invention.

Figure 25 is a front view of the hook-holding member in the apparatus for fixing a vehicle carrying platform according to the seventh embodiment of this invention.

Figure 26 is a vertical cross-sectional front view of the seventh embodiment the apparatus for fixing a vehicle carrying platform according to this invention before an operation.

Figure 27 is a vertical cross-sectional front view of the seventh embodiment of the apparatus for fixing a vehicle carrying platform according to this invention during an operation.

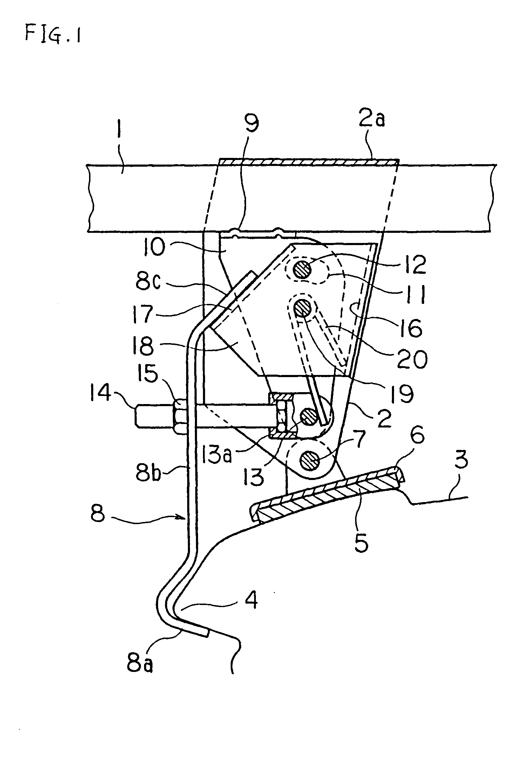

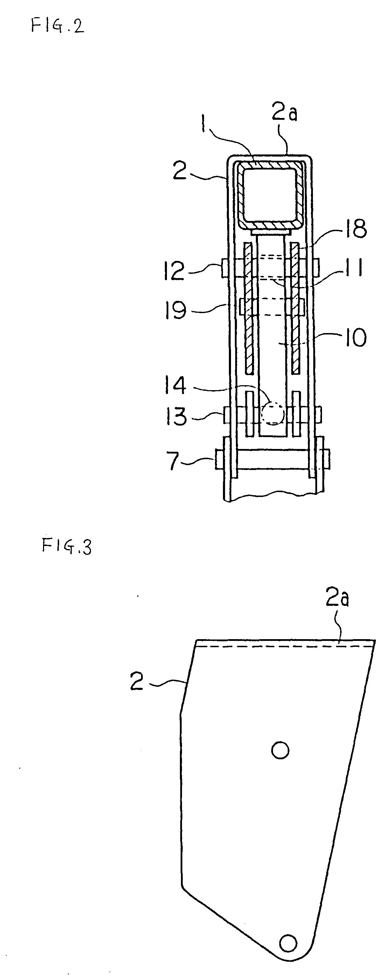

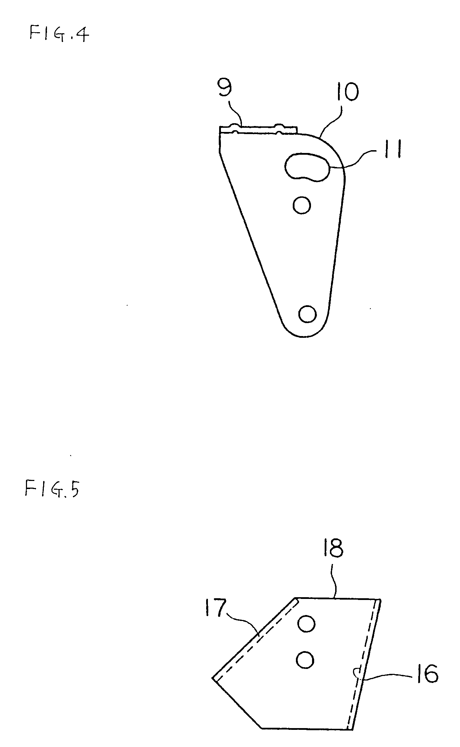

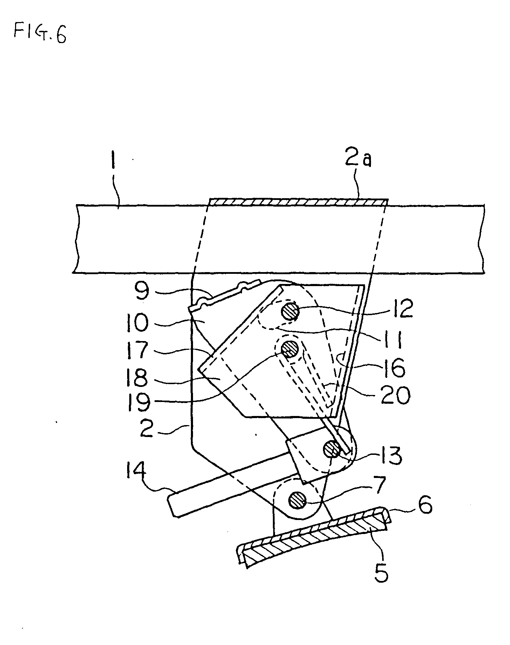

In Figures 1 to 7, reference numeral 1 designates a carrier bar; 2 is a "⊐" shaped stay having an upper part 2a contacting the upper surface of a carrier bar 1 when it is inserted; 3 is a roof of a vehicle; 4 is a corner of the roof; 5 is a cushion fixed to the roof 3; 6 is a stay base mounted on the cushion 5; 7 is a pivotal pin for pivotally fixing the lower part of the stay 2 to the stay base 6; and 8 is a hook for hooking a lower bent part 8a to the corner 4 of said roof 3.

In a first embodiment of this invention, a pressing section 9 that contacts the lower surface of said carrier bar 1 is provided on the outer (the hook 8 side) upper surface of the pressing plate 10, the inner (the opposite side of the hook 8) upper part of said pressing plate 10 is connected to the intermediate portion of said stay 2 via an arc-like long hole 11 with its center at the lower pivotal point, while said lower part of said pressing plate 10 and the intermediate portion 8b of said hook 8 are connected via a pivotal pin 13, a mounting member 13a rotatably connects to the pivotal pin 13, a bolt 14, the head of which is fixed to the mounting member 13a, and a tightening member comprising a nut 15 that is spirally connected to the bolt 14 outside said hook 8.

The upper part of a hook-holding member 18 disposed so as to grasp said pressing plate 10 within the "⊐"-shaped stay 2 and having a vertical-end plate 16 and an inclined slide section 17 is connected to the intermediate section of said stay 2 via said pin 12, and its intermediate portion is rotatably connected to the intermediate portion of said pressing plate 10 via a pivotal pin 19. A spring 20 is wound around the pivotal pin 19 with one end contacting the vertical end plate 16 of the hook holding member 18 and the other end contacting the pivotal pin 13 between the bolt 14 and the pressing plate 10.

An upper inclined part 8c is formed in the upper part of the hook 8 and slidably engages with the inclined slide section 17 of the hook-holding member 18.

The apparatus for fixing a vehicle carrying platform has the above configuration. Consequently, when the lower bent part 8a of the hook 8 locks on the corner 4 of the roof 3, and the intermediate portion 8b of the hook 8 is attached to the pressing plate 10 via a pivotal pin 13, a bolt 14, and a nut 15 and tightened, the carrier bar 1 is tightened and fixed firmly by the stay 2 and the pressing plate 9 of the pressing plate 10.

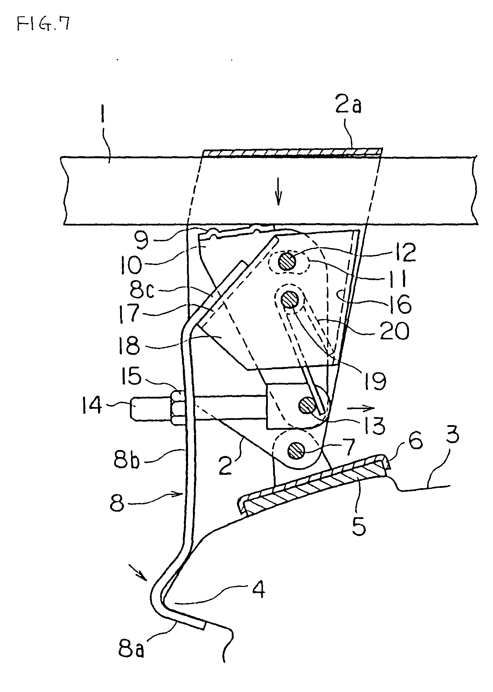

Under these conditions, if a load is applied to the carrier bar 1, causing the carrier bar 1 to be bent as shown in Figure 7, downward force is applied to the pressing section 9 of the pressing plate 10. As a result, the pressing plate 10 rotates counterclockwise relative to the stay 2 against the force of the spring 20, and the hook 8 is pressed horizontally toward the right as shown by the arrow via a pivotal pin 13 and a bolt 14. Since, however, the hook-holding member 18 rotates clockwise around the pivotal pin 12 against the spring 20, and the upper inclined part 8c of said hook 8 rotates counterclockwise around the bolt 14 via the inclined slide section 17 of said hook-holding member 18, the lower bent part 8a of the hook 8 is pressed firmly against the corner 4 of the roof 3 of the vehicle as shown by the arrow in Figure 7. The loosening of the hook 8 caused by the astride phenomenon, which has not yet been solved by conventional techniques, is thus completely prevented.

In a second embodiment of this invention, a self-locking member 21 is rotatably attached to the pivotal pin 13 to pivotally fix the bolt 14 to the lower part of said pressing plate 10 as shown in Figure 8, a spring-like lever 22 and a toothed section 23 that extend in parallel in the direction opposite to said hook 8 are provided on the self-locking member 21, and a protrusion 24 and a stage 25 engaging the lever and the toothed section, respectively, are formed in the corresponding positions of said stay 2.

According to this embodiment, if the nut 15 is loosened, the pressing plate 10 does not rotate because the toothed section 23 engages the stage 25, thereby preventing the loosening of the carrier bar 1 fixed by the stay 2 and the pressing plate 10.

The engagement between said toothed section 23 and the stage 25 can be released easily by picking said spring-like lever 22 and the toothed section 23 in such a way that they approach each other.

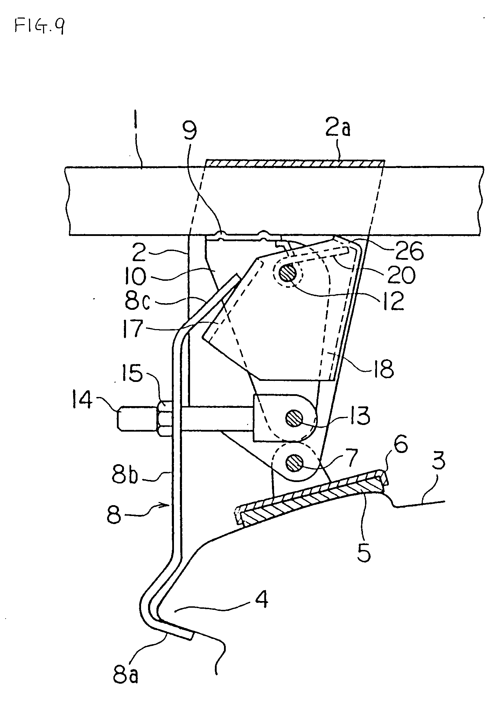

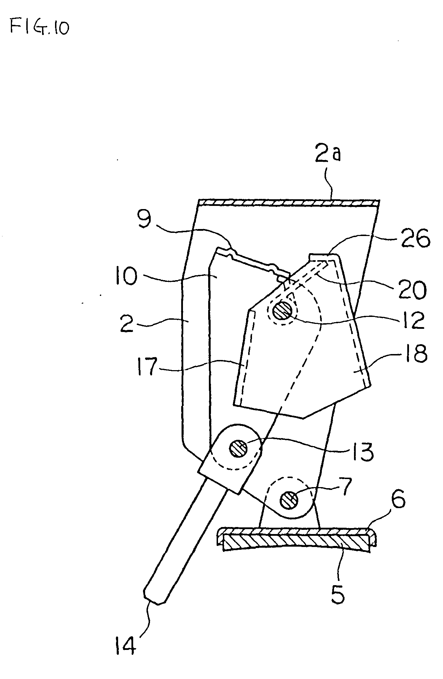

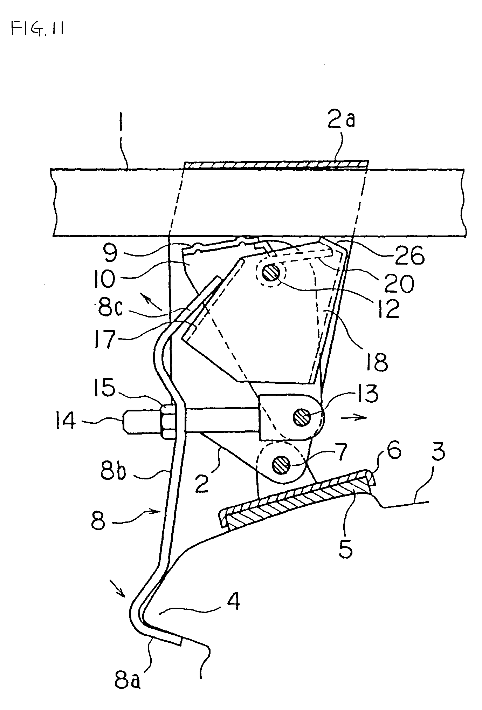

Figures 9 to 11 show a third embodiment of this invention. In this embodiment, without the use of the pivotal pin 19 to rotatably connect the intermediate portion of the pressing plate 10 and the intermediate portion of the hook-holding member 18 together, the inner upper surface of said hook-holding member 18 is folded to form a pressing section 26, the spring 20 in the first and second embodiments is wound around the pin 12 to rotatably connect the intermediate portion of said stay 2 to the uppper part of said pressing plate 10 and the hook-holding member 18, said spring 20 having one end contacting the lower surface of the pressing section 9 of said upper pressing plate 10 and another end contacting the lower surface of the pressing section 26 of said hook-holding member 18.

This embodiment performs the same operation and has the same advantages as the first and second embodiments.

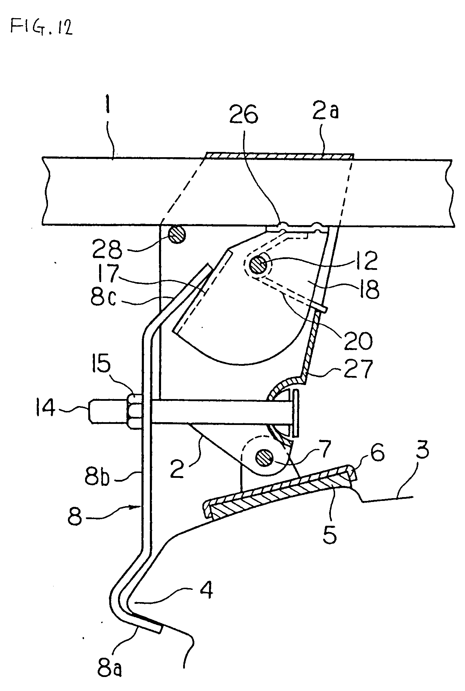

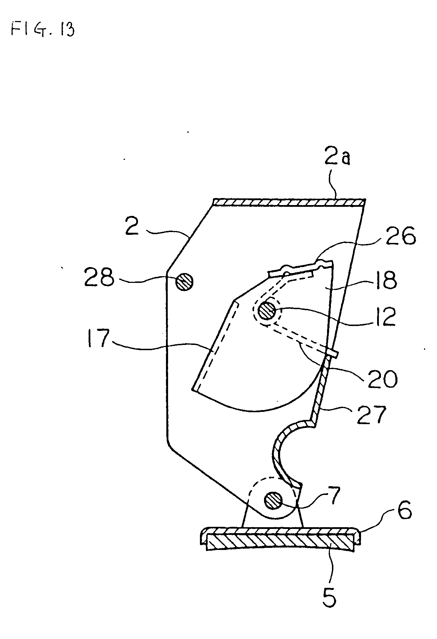

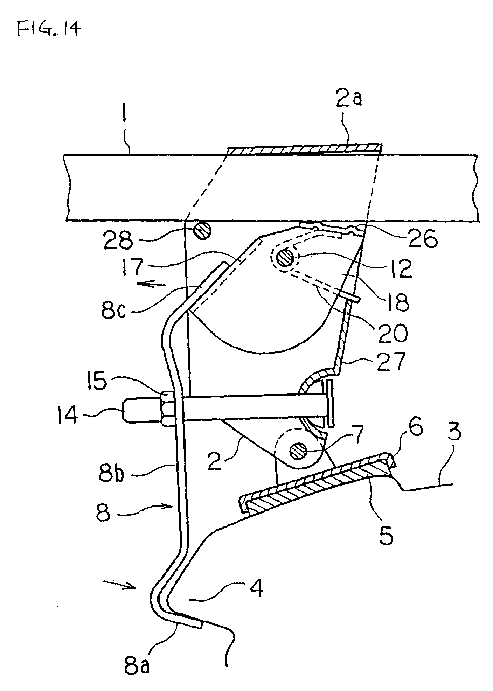

Figures 12-14 show a fourth embodiment of this invention. In this embodiment, without the use of the pressing plate 10 as shown in the third embodiment, the base of said bolt 14 is capable of inclining freely and is connected to a rib 27 provided on the inner lower part of the stay 2. One end of said spring 20 is allowed to contact the rib 27 provided on the inner lower part of the stay 2, and the other end of said spring 20 is allowed to contact the lower surface of the pressing section 26. A locking pin 28 contacts the lower surface of the carrier bar 1 and is formed so that it protrudes from the outer middle of the stay 2 to provide support to the lower surface of the carrier bar 1.

The fourth embodiment performs the same operation and has the same advantages as the above embodiments.

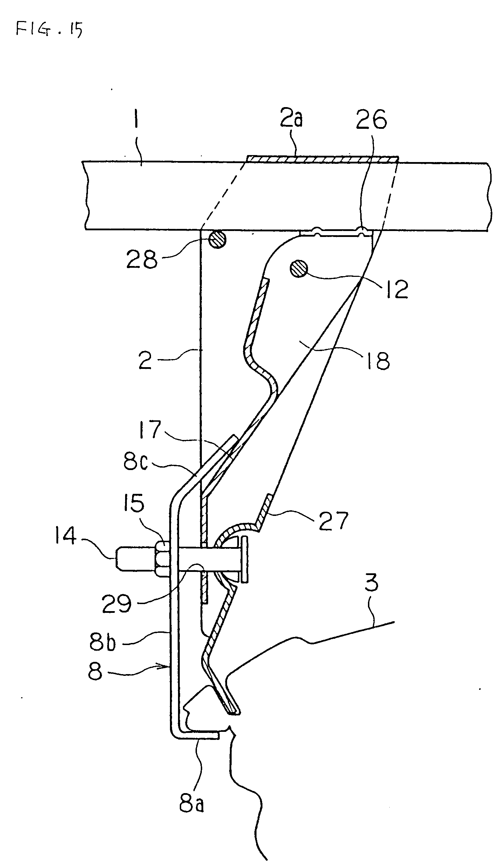

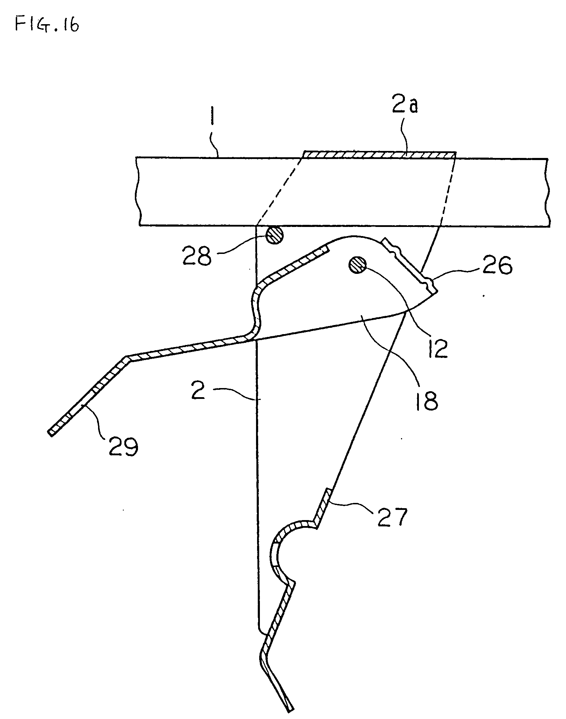

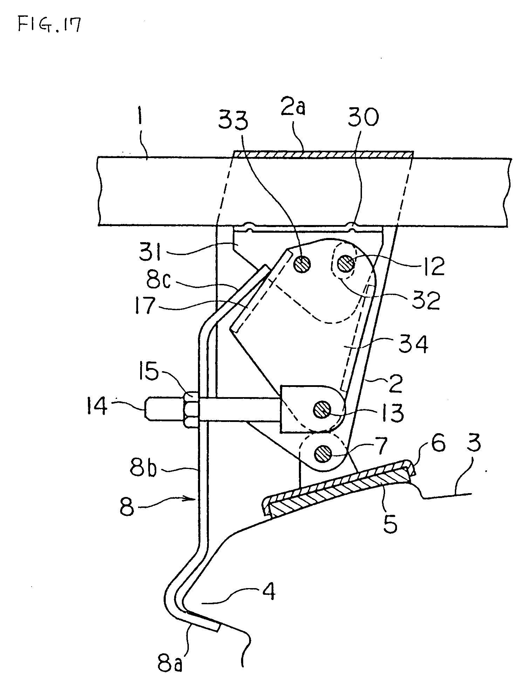

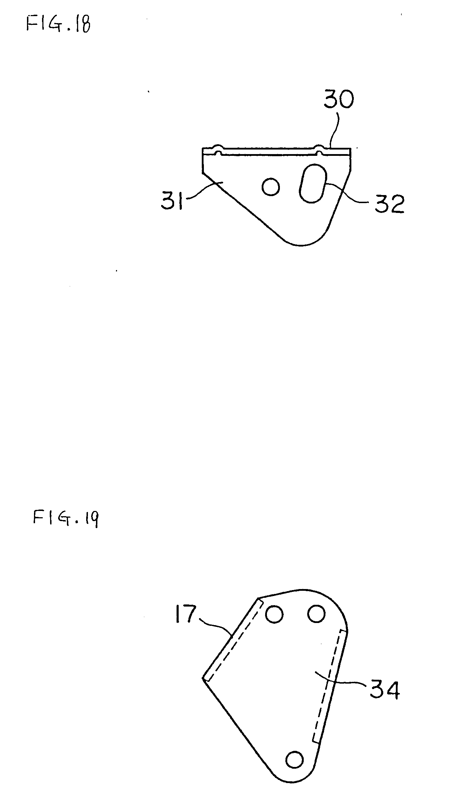

Figures 15 and 16 show a fifth embodiment. In this embodiment, without the use of the spring 20, as in the fourth embodiment, the inclined slide section 17 of the hook-holding member 18 is extended downward, and said bolt throughhole 29 into which the bolt 14 is inserted so that it can rotate is formed.

The fifth embodiment prevents the hook 8 from being removed from the hook-holding member 18 thereby tightening the fixation of the carrier bar 1 even when the bolt 14 and the nut 15 are loosened.

The other operations and advantages of the fifth embodiment are the same as those of the above embodiments.

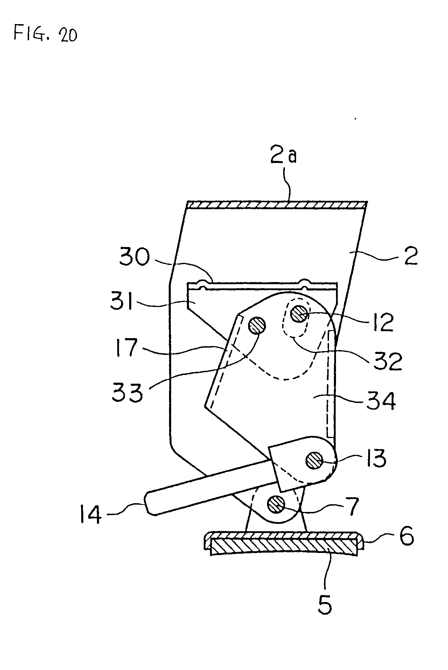

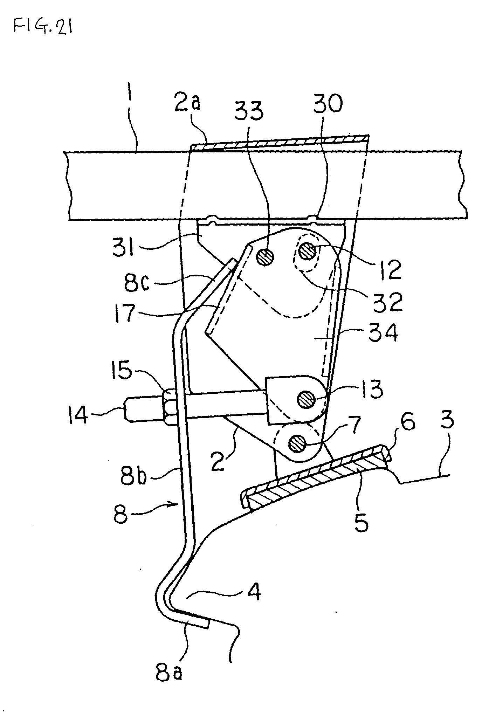

Figures 17 to 21 show a sixth embodiment of this invention. This embodiment uses a stay, a hook, a bolt, and a nut similar to the stay 2, the hook 8, the bolt 14, and the nut 15, respectively, in the first and second embodiment. In this embodiment, a pressing section 30, the upper surface of which is connected to the lower surface of the carrier bar 1, is provided , and the intermediate portion of the pressing plate 31 is connected to the inner intermediate portion of said stay 2 via an arc-like long hole 32 with its center at the intermediate central pivotal point, using the pin 12. The outer upper part of the hook-holding member 34 rotatably connects to the intermediate center of the pressing plate 31 via a pivotal pin 33, and the lower part of the hook-holding member 34 and the intermediate portion 8b of the hook 8 are connected via a tightening member that includes the pivotal pin 13, the bolt 14, and the nut 15.

The inclined slide section 17 is formed outside said hook-holding member 34, and the upper inclined part 8c of said hook 8 slidably engages the inclined slide section 17 of the hook-holding member 34.

According to this sixth embodiment, the surface of the pressing section 30 of the pressing plate 31 can be constantly maintained parallel to the lower surface of the carrier bar 1 to constantly and uniformly press the carrier bar 1, thereby preventing excessive force from being applied thereto.

The other operations and advantages of the sixth embodiment are the same as those of the above embodiments.

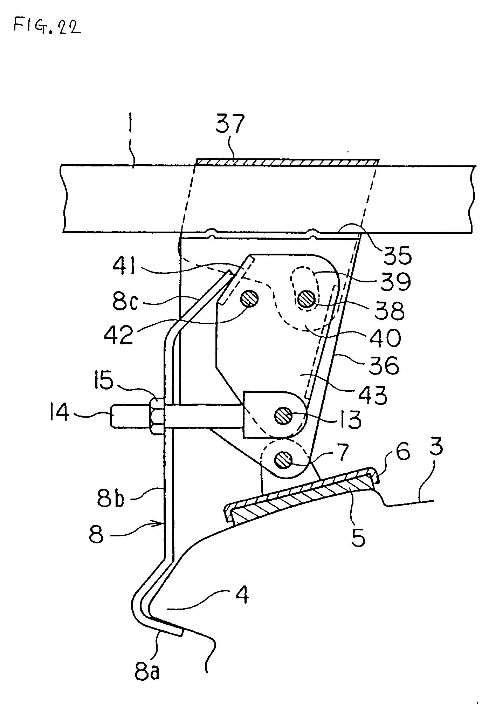

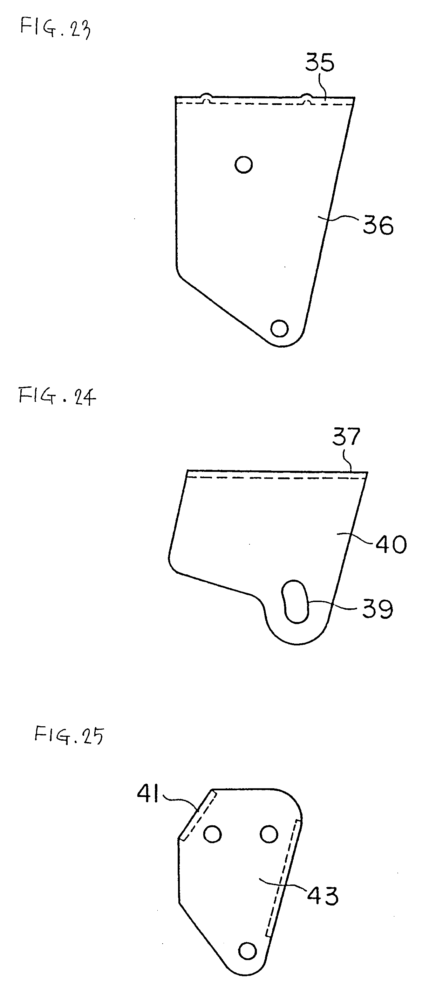

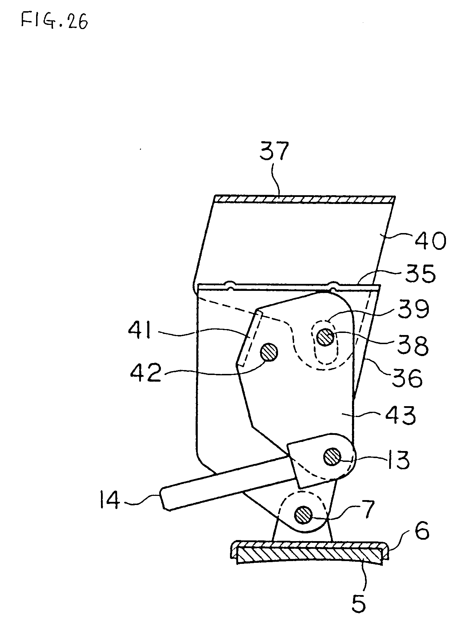

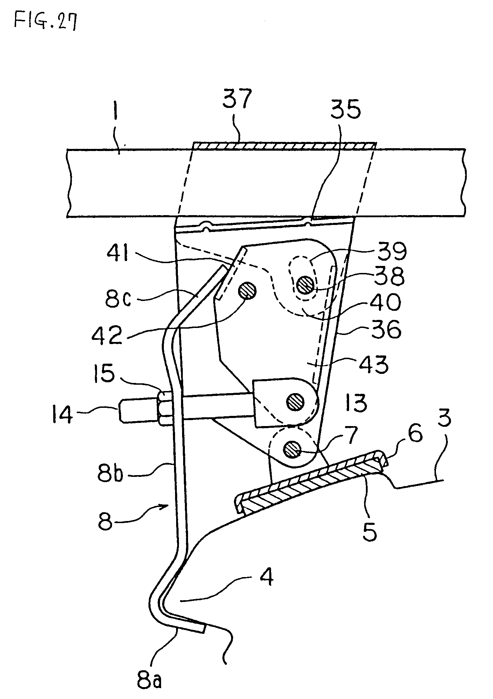

Figures 22 to 27 show a seventh embodiment of this invention. The vehicle carrying platform fixing apparatus according to this embodiment comprises a stay 36 having on its upper surface a pressing section 35 that engages the lower surface of a carrier bar and the lower part of which is attached to the roof 3 of a vehicle via the pivotal pin 7; a hook 8 the lower bent part 8a of which is hooked to the corner 4 of the roof 3 of the vehicle; a pressing plate 40 that has on its upper surface a surface 37 that engages the upper surface of the carrier bar 1 and on its lower part a long hole 39 into which the pin 38 is inserted; a hook-holding member 43 having in its outer upper part an inclined free-sliding slide section 41 that engages the upper inclined part 8c of said hook 8, the upper part of which is connected to the lower part of said pressing plate 40 and the upper part of said stay 36 via said pin 38 and the pivotal pin 42, respectively, and the lower part of which is connected to the intermediate portion 8b of the hook 8 via a tightening member that includes the pivotal pin 13, the bolt 14, and the nut 15.

According to the seventh embodiment, when a lift is applied to the carrier bar 1, the pin 38 is pulled upward via the pressing plate 40. The hook-holding member 43 thus rotates counterclockwise around the pivotal pin 42, thereby controlling the upper inclined part 8c of the hook 8 so that it rotates counterclockwise around the bolt 14, which further presses the lower bent part 8a of the hook 8 against the corner 4 of the roof 3.

The other operations and advantages of the seventh embodiment are the same as those of the above embodiments.

In addition, the combination of a bolt and nut in the above embodiments may be inverted. For example, the nut 15 may be fixed to the mounting member 13a, to which the bolt 14 is spirally connected, thereby allowing the head of the bolt 14 to press the hook 8.

As described above, the apparatus for fixing a vehicle carrying platform is very advantageous in that a very simple constitution can be used to prevent the hook from being loosened by the astride phenomenon, which occurs when a load is applied to the carrier bar.

## Claims

1. Apparatus for fixing a carrying platform to a vehicle, the apparatus comprising:
a stay (2; 36) for supporting the platform on the vehicle;
a hook (8) having a lower hooked part (8a) for engaging a portion (4) of the vehicle;
a pressing plate (10; 18; 31; 40) having a portion (9; 26; 37) for engaging a bar (1) of the platform such that the bar (1) of the platform is engaged between the pressing plate (10) and the stay (2; 36); and
a tightening member (13a, 14, 15);
characterised in that force exerted on the pressing plate (10; 18; 31; 40) by weight on the platform is transmitted to the hook (8) to force the hook (8) against the portion (4) of the vehicle, wherein at least a portion of said force exerted on said pressing plate is transmitted to the hook (8) via said tightening member (13a, 14, 15).

2. Apparatus according to claim 1, wherein at least a portion of the force exerted on the pressing plate (10) is transmitted to the hook (8) via outward movement of an upper part (8c) of the hook (8).

3. Apparatus according to claim 2, wherein the tightening member (13a, 14, 15) facilitates inward movement of an intermediate portion (8b) of the hook (8) simultaneously with the outward movement of the upper part (8c) of the hook (8).

4. Apparatus according to claim 2, wherein the tightening member (13a, 14, 15) substantially restricts movement of an intermediate portion (8b) of the hook (8) simultaneously with the outward movement of the upper part (8c) of the hook (8).

5. Apparatus according to any preceding claim, wherein the pressing plate (10) is pivotally mounted for pivotal movement with respect to the stay (2).

6. Apparatus according to any preceding claim, wherein the pressing plate (10) includes a formation for engaging a corresponding formation on the bar (1) of the platform, and wherein relative movement between the pressing plate (10) and the bar (1) is substantially restricted.

7. Apparatus according to any preceding claim, wherein the stay (2) is U- or C-shaped.

8. Apparatus according to any preceding claim, further including a self-locking member (21) to prevent loosening of the bar (1) of the platform.

9. Apparatus according to claim 8, wherein the self-locking member (21) comprises a lever (22) which engages a first protrusion (24) on the stay (2), and a toothed section (23) which engages a second protrusion (25) on the stay (2).

10. Apparatus according to claim 9, wherein the self-locking mechanism (21) is released by movement of the lever (23) and the toothed section (23) towards one another.

11. Apparatus according to any preceding claim, wherein the stay (2) has in its upper part (2a) a surface that engages an upper surface of the bar (1), and a lower part which engages the roof (3) of the vehicle; the pressing plate (10) engaging a lower surface of the bar (1), and having an upper part which is connected to an intermediate portion of the stay (2) via a pin (12), and a lower part which is connected to an intermediate portion (8b) of the hook (8) via the tightening member (13a, 14, 15); the apparatus further including a hook-holding member (18) having a slide section (17) that slidably engages the upper part (8c) of the hook (8), the upper part of the hook-holding member (18) being connected to the intermediate portion of the stay (2) via said pin (12) and the intermediate portion of the hook-holding member (18) being pivotally connected to the intermediate portion of the pressing plate (10); and an elastic means (20) to bias the hook-holding member (18) into engagement with the upper part (8c) of the hook (8).

12. Apparatus according to any one of claims 1 to 10, wherein the stay (2) has in its upper part (2a) a surface that engages an upper surface of the bar (1), and a lower part which engages the roof (3) of the vehicle, and which is connected to an intermediate portion (8b) of the hook (8) via the tightening member (13a, 14, 15); the hook-holding member (18) has a pressing section (26) on its upper surface that engages a lower surface of the bar (1), and an upper part which is connected to an intermediate portion of the stay (2) via a pin (12); the hook-holding member (18) having a slide section (17) that slidably engages the upper part (8c) of the hook (8).

13. Apparatus according to claim 12, further including an elastic means (20) inserted between the stay (2) and the pressing plate (18).

14. Apparatus according to any one of claims 1 to 10, wherein the stay (2) has in its upper part (2a) a surface that engages an upper surface of the bar (1), and a lower part which engages the roof (3) of the vehicle; the pressing plate (31) has a pressing section (30) on its upper surface that engages a lower surface of the bar (1), and is connected to an intermediate portion of the stay (2) via a pin (12); the apparatus further including a hook-holding member (34) having a slide section (17) that slidably engages the upper part (8c) of the hook (8), the upper part of the hook-holding member (34) being connected to the intermediate portion of the stay (2) via said pin (12), and being rotatably connected to the intermediate portion of the pressing plate (31) via a pivotal pin (33), and which is connected to an intermediate portion (8b) of the hook (8) via the tightening member (13a, 14, 15).

15. Apparatus according to any one of claim 1 to 10, wherein the stay (36) has on its upper part a surface (35) that engages a lower surface of the bar (1), and a lower part which engages the roof (3) of the vehicle; the pressing plate (40) has a pressing section (37) on its upper surface that engages an upper surface of the bar (1), and is connected to an intermediate portion of the stay (36) via a pin (38) and slot (39) arrangement; the apparatus further including a hook-holding member (43) having a slide section (41) that slidably engages the upper part (8c) of the hook (8), the upper part of the hook-holding member (43) being connected to the intermediate portion of the stay (36) via said pin (38) and the intermediate portion of the hook-holding member (43) being rotatably connected to the intermediate portion of the pressing plate (40) via a pivotal pin (42), and a lower part which is connected to an intermediate portion (8b) of the hook (8) via the tightening member (13a, 14, 15).

16. Apparatus according to either claim 11 or claim 13, wherein the elastic means comprises a spring (20).

17. Apparatus according to any one of claims 11, 14 or 15, wherein the tightening member comprises a pin (13) for pivotally attaching the pressing plate (10) to the hook (8), a mounting member (13a) attached to the pin (13), a bolt (14), the head of which is coupled to the mounting member (13a), and a nut (15) threadedly coupled to the bolt (14).

18. Apparatus according to either claim 12 or claim 13, wherein said tightening member comprises a bolt (14) which includes a swivel, the swivel engaging a rib (27) provided on the stay (2) for relative movement between the stay (2) and the tightening member, and a nut (15) threadedly engaged with the bolt (14).

## Patentansprüche

1. Eine Vorrichtung zur Befestigung eines Dachgepäckträgers an einem Fahrzeug, wobei die Vorrichtung aus folgendem besteht:
einer Stütze (2; 36), die den Dachgepäckträger auf dem Fahrzeug stützt;
einem Haken (8) mit einem unteren Hakenteil (8a), der in einen Teil (4) des Fahrzeugs eingreift;
einer Druckplatte (10; 18; 31; 40) mit einem Teil (9; 26; 37), der in eine Stange (1) des Trägers eingreift, so daß die Stange (1) des Trägers zwischen der Druckplatte (10) und der Stütze (2; 36) in Eingriff gehalten wird; und
einem Festspannelement (13a,14, 15);
dadurch gekennzeichnet, daß die durch das Gewicht auf dem Träger auf die Druckplatte (10; 18; 31; 40) ausgeübte Kraft auf den Haken (8) übertragen wird, um den Haken (8) gegen den Teil (4) des Fahrzeugs zu drücken, wobei zumindest ein Teil der auf die Druckplatte ausgeübten Kraft über das Festspannelement (13a, 14, 15) auf den Haken (8) übertragen wird.

2. Vorrichtung gemäß Anspruch 1, wobei zumindest ein Teil der auf die Druckplatte (10) ausgeübten Kraft über eine nach außen gerichtete Bewegung eines oberen Teils (8c) des Hakens (8) auf den Haken (8) übertragen wird.

3. Vorrichtung gemäß Anspruch 2, wobei das Festspannelement (13a, 14, 15) gleichzeitig mit der nach außen gerichteten Bewegung des oberen Teils (8c) des Hakens (8) eine nach innen gerichtete Bewegung eines Mittelteils (8b) des Hakens (8) bewirkt.

4. Vorrichtung gemäß Anspruch 2, wobei das Festspannelement (13a, 14, 15) gleichzeitig mit der nach außen gerichteten Bewegung des oberen Teils (8c) des Hakens (8) die Bewegung eines Mittelteils (8b) des Hakens (8) im wesentlichen beschränkt.

5. Vorrichtung gemäß einem der vorhergehenden Ansprüche, wobei die Druckplatte (10) zur Drehung bezüglich der Stütze (2) drehbar angebracht ist.

6. Vorrichtung gemäß einem der vorhergehenden Ansprüche, wobei die Druckplatte (10) eine Struktur umfaßt, die in eine entsprechende Struktur auf der Stange (1) des Trägers eingreift, und wobei die relative Bewegung zwischen der Druckplatte (10) und der Stange (1) im wesentlichen beschränkt ist.

7. Vorrichtung gemäß einem der vorhergehenden Ansprüche, wobei die Stütze (2) U- oder C-förmig ist.

8. Vorrichtung gemäß einem der vorhergehenden Ansprüche, die weiters ein Selbstsperrungselement (21) umfaßt, das verhindert, daß sich die Stange (1) des Trägers löst.

9. Vorrichtung gemäß Anspruch 8, wobei das Selbstsperrungselement (21) einen Hebel (22), der in einen ersten vorstehenden Teil (24) auf der Stütze (2) eingreift, und einen gezahnten Abschnitt (23), der in einen zweiten vorstehenden Teil (25) auf der Stütze (2) eingreift, umfaßt.

10. Vorrichtung gemäß Anspruch 9, wobei der Selbstsperrungsmechanismus (21) durch eine Bewegung des Hebels (22) und des gezahnten Abschnitts (23) aufeinander zu ausgelöst wird.

11. Vorrichtung gemäß einem der vorhergehenden Ansprüche, wobei die Stütze (2) an ihrem oberen Teil (2a) eine Fläche, die in eine obere Fläche der Stange (1) eingreift, und einen unteren Teil, der in das Dach (3) des Fahrzeugs eingreift, aufweist, wobei die Druckplatte (10) in eine untere Fläche der Stange (1) eingreift und einen oberen Teil, der über einen Stift (12) mit einem Mittelteil der Stütze (2) verbunden ist, und einen unteren Teil, der über das Festspannelement (13a, 13, 15) mit dem Mittelteil (8b) des Hakens (8) verbunden ist, aufweist; wobei die Vorrichtung weiters ein Hakenhalteelement (18), das einen Gleitabschnitt (17) aufweist, der in den oberen Teil (8c) des Hakens (8) gleitend eingreift, wobei der obere Teil des Hakenhaltelements (18) über den Stift (12) mit dem Mittelteil der Stütze (2) verbunden ist und der Mittelteil des Hakenhalteelements (18) mit dem Mittelteil der Druckplatte (10) drehbar verbunden ist; und ein elastisches Mittel (20), um das Hakenhalteelement (18) mit dem oberen Teil (8c) des Hakens (8) in den Eingriff zu lenken, umfaßt.

12. Vorrichtung gemäß einem der Ansprüche 1 bis 10, wobei die Stütze (2) an ihrem oberen Teil (2a) eine Fläche, die in eine obere Fläche der Stange (1) eingreift, und einen unteren Teil, der in das Dach (3) des Fahrzeugs eingreift und über das Festspannelement (13a, 14, 15) mit einem Mittelteil (8b) des Hakens (8) verbunden ist, aufweist; das Hakenhaltelement (18) weist auf seiner oberen Fläche einen Druckabschnitt (26) auf, der in eine untere Fläche der Stange (1) eingreift, und einen oberen Teil aufweist, der über einen Stift (12) mit dem Mittelteil der Stütze (2) verbunden ist; wobei das Hakenhalteelement (18) einen Gleitabschnitt (17) aufweist, der in den oberen Teil (8c) des Hakens (8) gleitend eingreift.

13. Vorrichtung gemäß Anspruch 12, die weiters ein elastisches Mittel (20) umfaßt, das zwischen die Stütze (2) und die Druckplatte (18) eingeschoben wird.

14. Vorrichtung gemäß einem der Ansprüche 1 bis 10, wobei die Stütze (2) in ihrem oberen Teil (2a) eine Fläche, die in eine obere Fläche der Stange (1) eingreift, und einen unteren Teil, der in das Dach (3) des Fahrzeugs eingreift, aufweist; wobei die Druckplatte (31) an ihrer oberen Fläche einen Druckabschnitt (30) aufweist, der in eine untere Fläche der Stange (1) eingreift und über einen Stift (12) mit einem Mittelteil der Stütze (2) verbunden ist; wobei die Vorrichtung weiters ein Hakenhalteelement (34) umfaßt, das einen Gleitabschnitt (17) aufweist, der in den oberen Teil (8c) des Hakens (8) gleitend eingreift, wobei der obere Teil des Hakenhalteelements (34) über den Zapfen (12) mit dem Mittelteil der Stütze (2) verbunden ist, und wobei das Hakenhaltelement (34) über einen Drehzapfen (33) mit dem Mittelteil der Druckplatte (31) und über das Festspannelement (13a, 14, 15) mit einem Mittelteil (8b) des Hakens (8) verbunden ist.

15. Vorrichtung gemäß einem der Ansprüche 1 bis 10, wobei die Stütze (36) an ihrem oberen Teil eine Fläche (35), die in eine untere Fläche der Stange (1) eingreift, und einen unteren Teil, der in das Dach (3) des Fahrzeugs eingreift, aufweist; die Druckplatte (40) weist an ihrer oberen Fläche einen Druckabschnitt (37) auf, der in eine obere Fläche der Stange (1) eingreift und über eine Stift- (38) und Schlitz-(39)-anordnung mit einem Mittelteil der Stütze (36) verbunden ist; die Vorrichtung umfaßt weiters ein Hakenhalteelement (43), das einen Gleitabschnitt (41), der in den oberen Teil (8c) des Hakens (8) eingreift, wobei der obere Teil des Hakenhalteelements (43) über den Stift (38) mit dem Mittelteil der Stütze (36) verbunden ist und der Mittelteil des Hakenhalteelements (43) über einen Drehzapfen (42) mit dem Mittelteil der Druckplatte (40) verbunden ist, und einen unteren Teil, der über das Festspannelement (13a, 14, 15) mit einem Mittelteil (8b) des Hakens (8) verbunden ist, aufweist.

16. Vorrichtung gemäß Anspruch 11 oder 13, wobei das elastische Mittel eine Feder (20) ist.

17. Vorrichtung gemäß einem der Ansprüche 11, 14 oder 15, wobei das Festspannelement aus einem Stift (13) zur drehbaren Befestigung der Druckplatte (10) am Haken (8), einem Montierelement (13a), das am Stift (13) befestigt ist, einem Bolzen (14), dessen Kopf mit dem Montierelement (13a) verbunden ist, und einer Mutter (15), die mit dem Bolzen (14) verschraubt ist, besteht.

18. Vorrichtung gemäß Anspruch 12 oder Anspruch 13, wobei das Festspannelement aus einem Bolzen (14), der einen Drehteil umfaßt, wobei der Drehteil in eine an der Stütze (2) bereitgestellte Rippe (27) eingreift, damit sich die Stütze (2) und das Festklemmelement bezüglich einander drehen können, und einer Mutter (15), die mit dem Bolzen (14) verschraubt ist, besteht.

## Revendications

1. Appareil destiné à arrimer une plate-forme porteuse à un véhicule, l'appareil comprenant :
un montant (2, 36) destiné à soutenir la plate-forme sur le véhicule ;
un crochet (8) possédant une partie inférieure crochue (8a) destinée à s'engrener dans une portion (4) du véhicule ;
une plaque de pression (10, 18, 31, 40) possédant une portion (9, 26, 37) dans laquelle une barre (1) de la plate-forme est destinée à s'engager de sorte que la barre (1) de la plate-forme soit engagée entre la plaque de pression (10) et le montant (2, 36) ; et
un élément de serrage (13a, 14, 15) ;
caractérisé en ce que la force exercée sur la plaque de pression (10, 18, 31, 40) par le poids se trouvant sur la plate-forme est transmise au crochet (8) afin de presser le crochet (8) contre la portion (4) du véhicule, dans lequel au moins une portion de ladite force exercée sur ladite plaque de pression est transmise au crochet (8) par le biais dudit élément de serrage (13a, 14, 15).

2. Appareil selon la revendication 1, dans lequel au moins une portion de la force exercée sur la plaque de pression (10) est transmise au crochet (8) par le biais du déplacement vers l'extérieur d'une partie supérieure (8c) du crochet (8).

3. Appareil selon la revendication 2, dans lequel l'élément de serrage (13a, 14, 15) facilite le déplacement vers l'intérieur d'une portion intermédiaire (8b) du crochet (8) de façon simultanée avec le déplacement vers l'extérieur de la partie supérieure (8c) du crochet (8).

4. Appareil selon la revendication 2, dans lequel l'élément de serrage (13a, 14, 15) restreint considérablement le déplacement d'une portion intermédiaire (8b) du crochet (8) de façon simultanée avec le déplacement vers l'extérieur de la partie supérieure (8c) du crochet (8).

5. Appareil selon n'importe quelle revendication précédente, dans lequel la plaque de pression (10) est montée de manière à pivoter pour se déplacer par pivotement par rapport au montant (2).

6. Appareil selon n'importe quelle revendication précédente, dans lequel la plaque de pression (10) comporte une structure destinée à s'engager dans une structure correspondante sur la barre (1) de la plate-forme, et dans lequel le déplacement relatif entre la plaque de pression (10) et la barre (1) est considérablement restreint.

7. Appareil selon n'importe quelle revendication précédente, dans lequel le montant (2) est en forme de U ou de C.

8. Appareil selon n'importe quelle revendication précédente, comportant de plus un élément autobloquant (21) afin d'empêcher que la barre (1) de la plate-forme se desserre.

9. Appareil selon la revendication 8, dans lequel l'élément autobloquant (21) comprend une manette (22), laquelle s'engrène dans une première saillie (24) sur le montant (2), et une section dentée (23), laquelle s'engrène dans une seconde saillie (25) sur le montant (2).

10. Appareil selon la revendication 9, dans lequel le mécanisme autobloquant (21) est débloqué en déplaçant la manette (23) et la section dentée (23) l'une vers l'autre.

11. Appareil selon n'importe quelle revendication précédente, dans lequel le montant (2) possède dans sa partie supérieure (2a) une surface dans laquelle s'engage une surface supérieure de la barre (1), et une partie inférieure qui s'engrène dans le toit (3) du véhicule ; la plaque de pression (10) dans laquelle s'engage une surface inférieure de la barre (1), et qui possède une partie supérieure reliée à une portion intermédiaire du montant (2) par le biais d'une broche (12), et une partie inférieure reliée à une portion intermédiaire (8b) du crochet (8) par le biais de l'élément de serrage (13a, 14, 15) ; l'appareil comportant de plus un élément de retenue de crochet (18) possédant une section de glissement (17) qui s'engrène par glissement dans la partie supérieure (8c) du crochet (8), la partie supérieure de l'élément de retenue de crochet (18) étant reliée à la portion intermédiaire du montant (2) par le biais de ladite broche (12) et la portion intermédiaire de l'élément de retenue de crochet (18) étant reliée à la portion intermédiaire de la plaque de pression (10) de manière à pivoter ; et un moyen élastique (20) afin de décaler l'élément de retenue de crochet (18) afin qu'il s'engrène dans la partie supérieure (8c) du crochet (8).

12. Appareil selon une quelconque des revendications 1 à 10, dans lequel le montant (2) possède dans sa partie supérieure (2a) une surface dans laquelle s'engage une surface supérieure de la barre (1), et une partie inférieure qui s'engrène dans le toit (3) du véhicule, et qui est reliée à une portion intermédiaire (8b) du crochet (8) par le biais de l'élément de serrage (13a, 14, 15) ; l'élément de retenue de crochet (18) possède une section de pression (26) sur sa surface supérieure qui s'engrène dans une surface inférieure de la barre (1), et une partie supérieure qui est reliée à une portion intermédiaire du montant (2) par le biais d'une broche (12) ; l'élément de retenue de crochet (18) possédant une section de glissement (17) qui s'engrène par glissement dans la partie supérieure (8c) du crochet (8).

13. Appareil selon la revendication 12, comportant de plus un moyen élastique (20) inséré entre le montant (2) et la plaque de pression (18).

14. Appareil selon une quelconque des revendications 1 à 10, dans lequel le montant (2) possède dans sa partie supérieure (2a) une surface dans laquelle s'engage une surface supérieure de la barre (1), et une partie inférieure qui s'engrène dans le toit (3) du véhicule ; la plaque de pression (31) possède une section de pression (30) sur sa surface supérieure dans laquelle s'engage une surface inférieure de la barre (1), et est reliée à une portion intermédiaire du montant (2) par le biais d'une broche (12) ; l'appareil comportant de plus un élément de retenue de crochet (34) possédant une section de glissement (17) qui s'engrène par glissement dans la partie supérieure (8c) du crochet (8), la partie supérieure de l'élément de retenue de crochet (34) étant reliée à la portion intermédiaire du montant (2) par le biais de ladite broche (12), et étant reliée à la portion intermédiaire de la plaque de pression (31) de manière à tourner par le biais d'une broche pivotante (33), et qui est reliée à une portion intermédiaire (8b) du crochet (8) par le biais de l'élément de serrage (13a, 14, 15).

15. Appareil selon une quelconque des revendications 1 à 10, dans lequel le montant (36) possède sur sa partie supérieure une surface (35) dans laquelle s'engage une surface inférieure de la barre (1), et une partie inférieure qui s'engrène dans le toit (3) du véhicule ; la plaque de pression (40) possède une section de pression (37) sur sa surface supérieure dans laquelle s'engage une surface supérieure de la barre (1), et est reliée à une portion intermédiaire du montant (36) par le biais d'un arrangement à broche (38) et à fente (39) ; l'appareil comportant de plus un élément de retenue de crochet (43) possédant une section de glissement (41) qui s'engrène par glissement dans la partie supérieure (8c) du crochet (8), la partie supérieure de l'élément de retenue de crochet (43) étant reliée à la portion intermédiaire du montant (36) par le biais de ladite broche (38) et la portion intermédiaire de l'élément de retenue de crochet (43) étant reliée à la portion intermédiaire de la plaque de pression (40) de manière à pouvoir tourner par le biais d'une broche pivotante (42), et une partie inférieure qui est reliée à une portion intermédiaire (8b) du crochet (8) par le biais de l'élément de serrage (13a, 14, 15).

16. Appareil selon la revendication 11 ou la revendication 13, dans lequel le moyen élastique comprend un ressort (20).

17. Appareil selon une quelconque des revendications 11, 14 ou 15, dans lequel l'élément de serrage comprend une broche (13) destinée à fixer la plaque de pression (10) au crochet (8) de manière pivotante, un élément de montage (13a) fixé à la broche (13), un boulon (14), dont la tête est accouplée à l'élément de montage (13a), et un écrou (15) accouplé grâce à un filetage au boulon (14).

18. Appareil selon la revendication 12 ou la revendication 13, dans lequel ledit élément de serrage comprend un boulon (14), lequel comporte une pièce pivotante, la pièce pivotante s'engageant dans une nervure (27) dont est muni le montant (2) destiné à permettre le déplacement relatif entre le montant (2) et l'élément de serrage, et un écrou (15) engagé grâce à un filetage dans un boulon (14).
